# EUROPÄISCHE PATENTSCHRIFT

(11) **EP 3 272 421 B1**
(45) Veröffentlichungstag und Bekanntmachung des Hinweises auf die Patenterteilung: **17.04.2019**
(21) Anmeldenummer: 17175709.9
(22) Anmeldetag: 13.06.2017
(51) Int. Cl.: B03B 5/36, B29B 17/02

(54) **SEPARATOR ZUR FLÜSSIGKEITSBASIERTEN TRENNUNG VON MIKROPLASTIKPARTIKELN AUS SEDIMENTEN UND VERWENDUNG DES SEPARATORS**
SEPARATOR FOR THE FLUID-BASED SEPARATION OF MICROPLASTIC PARTICLES FROM SEDIMENTS AND USE OF THE SEPARATOR
SEPARATEUR DESTINE A SEPARER SUR BASE LIQUIDE DES PARTICULES MICROPLASTIQUES A PARTIR DE SEDIMENTS ET UTILISATION DU SEPARATEUR

(30) Priorität: 23.07.2016 DE 102016008966
(43) Veröffentlichungstag der Anmeldung: 24.01.2018
(73) Patentinhaber: Alfred-Wegener-Institut Helmholtz-Zentrum für Polar- und Meeresforschung, 27570 Bremerhaven (DE)
(72) Erfinder: Gerdts, Gunnar, Dr., 27498 Helogland (DE)

(56) Entgegenhaltungen:
- EP-A2- 2 359 937
- DE-A1- 4 315 480
- DE-C- 482 583
- DE-U1-202004 011 327
- VALERIA HIDALGO-RUZ ET AL: "Microplastics in the Marine Environment: A Review of the Methods Used for Identification and Quantification", ENVIRONMENTAL SCIENCE & TECHNOLOGY, Bd. 46, Nr. 6, 2. März 2012 (2012-03-02), Seiten 3060-3075, XP055430332, US ISSN: 0013-936X, DOI: 10.1021/es2031505
- HANNES K. IMHOF ET AL: "A novel, highly efficient method for the separation and quantification of plastic particles in sediments of aquatic environments : Novel plastic particle separation method", LIMNOLOGY AND OCEANOGRAPHY: METHODS, Bd. 10, Nr. 7, 1. Juli 2012 (2012-07-01), Seiten 524-537, XP055431254, US ISSN: 1541-5856, DOI: 10.4319/lom.2012.10.524

## Beschreibung

Die Erfindung bezieht sich auf einen Separator zur flüssigkeitsbasierten Trennung von Mikroplastikpartikeln aus Sedimenten mit einem Basisblock mit einem Flüssigkeitseinlass, einer Siebanordnung, einem Trennrohr und mit einem Kopfblock mit einem Mikroplastikpartikelauslass sowie mit einem Flüssigkeitsauslass, einem Sedimenteinlass und einem Sedimentauslass und auf eine Verwendung des Separators in einem Verfahren zur flüssigkeitsbasierten Trennung von Mikroplastikpartikeln aus Sedimenten.

### Stand der Technik

Mikroplastik umfasst sowohl primäre Partikel, beispielsweise Basispellets und Granulate in Kosmetik, Hygiene- und Reinigungsprodukten, als auch sekundäre Partikel, die durch physikalische, chemische und biologische Einwirkung aus Makroplastik, Behälter aller Arten aber auch Fasergewebe, fragmentiert wurden. Mikroplastikpartikel zeigen gegenüber Makroplastik eine stark vergrößerte Oberfläche, die wasserabweisend ist und Anreicherungen und Adsorptionen von Schadstoffen befördert.

Im Meer treibender Plastikmüll hat eine extrem lange Abbauzeit. Durch Witterung und Wasser zersetzt er sich aber langsam und wird zu Mikroplastik, das zum Gewässerboden sinkt und von Meerestieren aufgenommen wird. Die Verbreitung von Mikroplastik in der marinen Umwelt wird zunehmend dokumentiert. In nahezu jedem Kilogramm Sandsediment sind mittlerweile Mikroplastikpartikel mit einem Durchmesser zwischen 38 µm und 1 mm zu finden. Die in diesen Größenfraktionen vorkommenden Mikroplastikpartikel entsprechen dem natürlichen Sediment oder Phytoplankton, sodass davon auszugehen ist, das eine ganze Reihe mariner Organismen - angefangen bei Kleinstlebewesen wie Zooplankton über Muscheln, Wattwürmer bis hin zu Seevögeln und Fischen - Kunststoffe aufnehmen und von eventuell schädigenden Wirkungen betroffen sind. Auch der Mensch ist betroffen, da die von den Kunststoffen abgegebenen Schadstoffe beispielsweise in Muscheln oder Seefischen akkumulieren und von ihm aufgenommen werden. Es bestehen daher verschiedene Ansprüche an die Forschung. Zum einen geht es um die Optimierung der Probennahme, des Nachweises, der Identität und der Quantifizierung der Mikroplastikpartikel. Zum anderen müssen grundlegende Studien zu ihrer Verteilung in der Umwelt und experimentelle Ansätze zu ihrer Wirkungsweise durchgeführt werden. Die vorliegende Erfindung befasst sich mit der Optimierung der Probennahme.

Bei einer gängigen Methodik zur Erfassung von Mikroplastik werden aus Sedimentproben durch Dichtetrennung die leichteren Partikel vom relativ schweren Sediment (Dichte von Sand ca. 2,65 g/cm³) getrennt. Hierzu wird das Sediment mit gesättigter Kochsalzlösung (oder anderen Lösungen) gemischt und geschüttelt. Der Überstand (Suspension) wird auf einen Filter abgegossen und (üblicherweise durch Vakuumfiltration) von der Flüssigkeit getrennt. Hier zeigen sich bereits mehrere Nachteile in der Methodik: Weder die "Schüttelzeit" noch die Wartezeit bis zum Absetzen der Sedimentpartikel aus der Suspension werden einheitlich angegeben oder liegen standardisiert vor. Der Überstand ist beim beschriebenen Verfahren zunächst "eingetrübt" und in den Filtern landet damit relativ viel Sediment, wenn zu früh abgegossen wird. Auch der Vorgang des Abgießens ist schlecht standardisierbar. Zur Bearbeitung entsprechender Forschungsfragen und Anforderungen aus der europäischen Wasserrahmenrichtlinie ergeben sich ähnliche methodische Notwendigkeiten, und so wurde an der Ludwig-Maximilians-Universität in München der sogenannte "Munich Plastic Sediment Separator" entwickelt, der auf dem beschriebenen Auftriebstrennungsprinzip aufgrund unterschiedlicher Dichten beruht.

Der "Munich Plastic Sediment Separator" ist beispielsweise aus der Veröffentlichung "A novel, highly efficient method for the separation and quantification of plastic particles in sediments of aquatic environments" (H.K. Imhof et al., Limnol. Oceanogr.: Methods 10, 212, 524-537) bekannt und arbeitet nach dem Dichtetrennungsprinzip. Als Basiselement weist der bekannte Separator einen Rührtopf mit einem bidirektionalen Flüssigkeitsventil zum Ein- und Auslassen von Flüssigkeiten auf. Der Rührtopf wird mit einer hochdichten Trennflüssigkeit gefüllt. Im Rührtopf befindet sich ein elektrisch angetriebener Propeller, der dem Rühren der Flüssigkeit im Rührtopf dient. Auf dem Rührtopf ist eine kegelstumpfförmige Trennkammer angeordnet. Am oberen Ende der Trennkammer befindet sich ein Sedimenteinlass, durch den das Sediment in den Rührtopf mit der durch den Propeller gerührten Flüssigkeit gegeben wird. Nach einer Rühr- und Standzeit wird ein Kopfblock auf die Trennkammer montiert. Der Kopfblock ist als abnehmbare Mikroplastikpartikelsammeleinheit mit zumindest einer Belüftung, einem bidirektionalen Partikelventil und einem Mikroplastikpartikelauslass ausgebildet. Die Trennflüssigkeit wird durch das Flüssigkeitsventil abgelassen und dann durch das Flüssigkeitsventil neue zugeführt, die bis in die Mikroplastiksammeleinheit bei geöffnetem Partikelventil strömt. Die enthaltenen Mikroplastikpartikel steigen aufgrund ihrer geringen Dichte in der Trennflüssigkeit bis in die Mikroplastikpartikelsammeleinheit auf. Diese weist ein Schauglas zur Beobachtung der sich anreichernden Mikroplastikpartikel auf. Das Partikelventil wird geschlossen und die Einheit belüftet. Nach Abnahme und Invertierung der Einheit werden die gesammelten Mikroplastikpartikel durch einen Trichter unter Anlegen von Vakuum ausgelassen.

Obwohl der bekannte Separator bereits eine sehr hohe Trennungseffizienz aufweist, kann es sich nachteilig auswirken, dass ein Propeller im Rührtopf angeordnet ist, da dieser die Mikroplastikpartikelform durch mechanische Beschädigungen beim Rühren verändern kann. Desweiteren werden große Mengen der Trennflüssigkeit benötigt, da die kegelförmige Trennkammer ein großes Volumen aufweist.

Neben dem dichtebasierten Trennprinzip existiert noch das adsorptionsbasierte Trennprinzip (Floatingprinzip), bei dem die zu trennenden Partikel an aufsteigende Luftblasen und Flüssigkeitsmoleküle adsorbiert und mitgenommen werden. Ein darauf beruhender Separator ist aus der Veröffentlichung "New techniques for the detection of microplastics in sediments and field collected organism" (M. Claessens et al., Marine Pollution Bulletin 70 (2013) 227-233) bekannt. Von diesem Separator mit seinem mechanischen Konstruktionsprinzip geht die vorliegende Erfindung als nächstliegendem Stand der Technik aus. In einem Basisblock als Standhilfe für den Separator befindet sich ein Flüssigkeitseinlass. Auf dem Basisblock ist eine Flanschanordnung vorgesehen, die eine Siebanordnung trägt. Diese besteht aus einem 1 mm Siebträger auf dem ein 38 µm Maschensieb angeordnet ist. Mikroplastikpartikel mit einem Durchmesser von weniger als 38 µm werden also nicht im Separator gehalten. Auf der Flanschanordnung ist vertikal ein zylindrisches Trennrohr (Länge 1,47 m, Durchmesser 15 cm) mit einer völlig geraden Trennstrecke angeordnet. Auf dem Trennrohr ist ein fest montierter Kopfblock angeordnet, der einen Flüssigkeitsauslass aufweist. Zusammen mit der Flüssigkeit werden auch die Mikroplastikpartikel durch den Kopfblock ausgelassen, sodass es sich gleichzeitig um einen Mikroplastikpartikelauslass handelt. Da der Kopfblock fest mit dem Trennrohr verbunden ist, ist auch der Mikroplastikpartikelauslass immer fest mit dem Trennrohr verbunden. Am oberen Ende weist der Kopfblock dann noch einen Sedimentein- und -auslass auf. Nach dem Einfüllen des Sediments durch den Sedimenteinlass im Kopfblock in das Trennrohr wird über den Flüssigkeitseinlass im Basisblock Wasser in das Trennrohr geleitet. Dieses durchströmt das Trennrohr und das darin befindliche Sediment und verlässt - zusammen mit den ausgespülten Mikroplastikpartikeln - den Separator durch den Flüssigkeits- bzw. Mikroplastikpartikelauslass im Kopfblock. Die ausgespülten Mikroplastikpartikelteilchen werden auf einem zweiten 38 µm Maschensieb gesammelt. Das verbrauchte Sediment wird durch einen Sedimentauslass im Kopfblock entleert.

Für ein verbessertes adsorptives Aufsteigen der Mikroplastikpartikel ist bei dem bekannten Separator am unteren Ende des Trennrohres eine Luftzufuhr vorgesehen. Diese besteht aus drei Belüftungsvorrichtungen, durch die Luft in das Sediment und das Wasser eingeblasen wird. Die eingeblasene Luft bewegt die Flüssigkeit und durchwirbelt das Sediment. Die Mikroplastikpartikel werden dann nicht nur an die Wassermoleküle, sondern auch an die Luftblasen adsorptiv gebunden. Durch die Luftzufuhr wird das Sediment stark verwirbelt. Es besteht daher die Gefahr, dass Mikroplastikpartikel in ihren Größenabmessungen verändert werden, sodass keine zuverlässigen Rückschlüsse auf deren originales Vorkommen im Sediment mehr möglich sind. Weiterhin muss beim Floatingprinzip damit gerechnet werden, dass nicht alle vorhandenen Mikroplastikpartikel gebunden und damit extrahiert werden (geringe Extraktionseffizienz), sodass auch keine zuverlässige quantitative Aussage über das Vorkommen der Mikroplastikpartikel im beprobten Sediment möglich ist.

In der EP 2 359 937 A2) wird eine Abscheidevorrichtung für benthische (lebende) Organismen aus Tiefseesediment offenbart, bei der in einem Trichter gleichzeitig eine radiale und eine axiale Wasserströmung erzeugt werden, sodass die Organismen in der sich verwirbelnden Wassersäule ohne starke Druckeinwirkung und ohne Siebdruckgewebe vom Sediment befreit werden können. Es befinden sich somit flüssigkeitsbewegende Mittel in Form von speziellen Einlassdüsen am Trichterboden und an der Wandung. Durch die erzeugten Wasserströmungen können Mikroplastikpartikel durch Kollisionen beschädigt werden.

### Aufgabenstellung

Ausgehend von dem nächstliegenden Stand der Technik ist daher die Aufgabe für die vorliegende Erfindung darin zu sehen, den gattungsgemäßen Separator so weiterzubilden, dass er eine möglichst hohe Extraktionseffizienz in Verbindung mit einer beschädigungsfreien Extraktion der originalen Mikroplastikpartikel ermöglicht. Desweiteren soll der mit der Erfindung beanspruchte Separator Anwendung in einem vorteilhaften Verfahren zur Extraktion der Mikroplastikpartikel finden, in das problemlos Reinigungsschritte integriert werden können. Die Lösung für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert. Der Verfahrensanspruch zeigt eine Lösung für die Anwendungsaufgabe auf, zusammen mit möglichen Modifikationen wird das beanspruchte Verfahren ebenfalls nachfolgend näher erläutert.

Der beanspruchte Separator ist erfindungsgemäß dadurch gekennzeichnet, dass der Flüssigkeitsauslass im Basisblock angeordnet ist, dass keine flüssigkeitsbewegenden Mittel im Trennrohr vorgesehen sind, dass der Sedimenteinlass direkt am oberen Ende des Trennrohres vorgesehen ist und dass der Kopfblock als abnehmbare Mikroplastikpartikelsammeleinheit mit zumindest einer Belüftung, einem bidirektionalen Partikelventil und dem Mikroplastikpartikelauslass ausgebildet ist, wobei der Basisblock die Siebanordnung trägt und darüber ein Flansch vorgesehen ist, der mit dem Trennrohr lösbar verbunden ist.

Bei dem erfindungsgemäßen Separator wird eine konstruktive Anordnung zur Verfügung gestellt, die eine Kombination des dichtebasierten Trennverfahrens mit dem adsorptionsbasierten Trennverfahrens bei der Partikeltrennung ermöglicht, wobei deren Vorteile kombiniert und deren Nachteile vermieden werden. Es wird mit dem mit der Erfindung beanspruchten Separator eine sehr hohe Extraktionseffizienz (nahezu 100%) mit einer Belassung der Mikroplastikpartikel im originalen Zustand erreicht. Das gängige Akronym "MPSS" für "Munich Plastic Sediment Separator" kann auch für den Separator nach der Erfindung beibehalten werden, nunmehr aber mit der Zusammensetzung "Micro Plasticparticle Sediment Separator".

Zunächst ist zur Erreichung der guten Eigenschaften des beanspruchten Separators der Flüssigkeitsauslass im Basisblock angeordnet. Dadurch kann eine Nutzung des Trennrohrs mit einer statischen Flüssigkeitssäule vorgenommen werden. Das Herausspülen des Sediments (und der enthaltenen Mikroplastikpartikel) durch eine ständige Durchströmung des Trennrohrs wird verhindert. Das Trennrohr kann vom Basisblock her mit Flüssigkeit gefüllt und auch wieder geleert werden. Spülschritte des eingebrachten Sediments vor der eigentlichen Extraktion werden ermöglicht. Eine besonders wichtige erfindungsgemäße Kennzeichnung des beanspruchten Separators besteht darin, dass keine flüssigkeitsbewegenden Mittel im Trennrohr vorgesehen sind. Es wird also weder ein mixender Propeller, wie er beim dichtebasierten Trennprinzip in der Trennkammer eingesetzt wird, noch eine wirbelnde Belüftung, wie sie beim adsorptionsbasierten Trennprinzip im Trennrohr eingesetzt wird, verwendet. Auf die Mikroplastikpartikel wirken nur die Auftriebskraft und die Adsorptionskraft und keine scherenden Kräfte ein. Bei dem erfindungsgemäßen Separator ist daher sicher gewährleistet, dass die zu detektierenden Mikroplastikpartikel bei der Extraktion nicht in ihren originalen Abmessungen beschädigt werden. Dadurch kann eine qualitativ sehr hochwertige Aussage über das korrekte Vorkommen der Mikroplastikpartikel im beprobten Sediment mit dem beanspruchten Separator erhalten werden.

Weiterhin ist bei dem erfindungsgemäßen Separator vorgesehen, dass der Sedimenteinlass direkt am oberen Ende des Trennrohres angeordnet ist. Der Sedimentauslass kann bevorzugt und vorteilhaft am unteren Ende des Trennrohres angeordnet sein. Der Kopfblock wird also weder beim Einbringen noch beim Herausholen des Sediments benötigt und damit vor Verunreinigungen geschützt. Eine besonders einfache Reinigung des Trennrohres und ein bequemes Ein- und Ausbringen des Sediments werden ermöglicht. Das Trennrohr weist keine behindernden oder verstopfenden Elemente auf, es kann über seinen Querschnitt einfach mit Sediment befüllt werden. Das Gleiche gilt für das Reinigen des Trennrohres.

Schließlich ist erfindungsgemäß der Kopfblock des beanspruchten Separators als abnehmbare Mikroplastikpartikelsammeleinheit mit zumindest einer Belüftung, einem bidirektionalen Partikelventil und dem Mikroplastikpartikelauslass ausgebildet. Die nach dem dichtebasierten Trennprinzip in einer entsprechenden Flüssigkeit aufsteigenden Mikroplastikpartikel werden zuverlässig in der Mikroplastikpartikelsammeleinheit gesammelt und können aus dieser nach deren Abnehmen vom oberen Ende des Trennrohres auch sehr leicht an einen anderen Ort verbracht werden. Die Belüftung dient der Zufuhr von Luft in das Trennrohrinnere, um die Demontage der Mikroplastikpartikelsammeleinheit einfach zu ermöglichen. Zu einer Verwirbelung des Sediments oder der Flüssigkeit im Trennrohr führt diese Belüftung aber nicht. Zur Funktionsweise der Mikroplastikpartikelsammeleinheit mit seinen einzelnen Komponenten wird auf den speziellen Beschreibungsteil hingewiesen.

Um sicher zu gewährleisten, dass alle im beprobten Sediment vorhandenen Mikroplastikpartikel in der Mikroplastikpartikelsammeleinheit gesammelt werden, sind eine ausreichend lange Trennstrecke und eine ausreichend lange Trennzeit erforderlich. Die lange, völlig gerade Trennstrecke wird bei dem erfindungsgemäßen Separator durch das Trennrohr zur Verfügung gestellt. Die ausreichende Trennzeit wird bei dem beanspruchten Separator durch eine ausreichend lange Standzeit des Sediments in der Trennflüssigkeit erreicht. Dazu ist es vorteilhaft, wenn die Vorgänge in der Mikroplastikpartikelsammeleinheit beobachtet werden können. Bevorzugt und vorteilhaft ist es daher nach einer ersten Ausführungsform des beanspruchten Separators, wenn die Mikroplastikpartikelsammeleinheit noch ein Schauglas und/oder einen Auslasstrichter aufweist. Der Auslasstrichter sorgt nach dem Invertieren der gefüllten und demontierten Mikroplastikpartikelsammeleinheit dafür, dass alle aufgetriebenen Mikroplastikpartikel sicher in ein anderes Sammelgefäß umgefüllt werden können. Zur Umsetzung der langen Trennstrecke im Trennrohr ist es ebenfalls vorteilhaft und bevorzugt, wenn nach einer weiteren Ausgestaltung der Erfindung das Trennrohr als Zylinder mit einem gegenüber dessen Länge kleinen Durchmesser ausgebildet ist. Dieses hat zudem noch den Vorteil, dass die Menge benötigter Flüssigkeiten zum Reinigen und zum Trennen relativ gering ist. In der bekannten kegelförmigen Trennkammer wird hingegen eine große Menge an hochdichter Trennflüssigkeit, die vorrätig gehalten werden muss und auch kostenintensiv ist, benötigt. Für Versuchszwecke ist es daneben noch vorteilhaft und bevorzugt, wenn das Trennrohr transparent ausgebildet ist, sodass die Auftriebsvorgänge im Trennrohr beobachtet werden können. Im dauerhaften Einsatz kann das Trennrohr dann aber aus einem undurchsichtigen Material, beispielsweise aus Stahl, bestehen.

Zum Befüllen und Entleeren des Separators ist es erforderlich, diesen häufiger auseinanderzubauen und anschließend wieder zusammenzubauen. Dabei ist es bevorzugt und vorteilhaft, wenn gemäß einer nächsten Erfindungsausgestaltung vorgesehen ist, dass das Trennrohr mit der Mikroplastikpartikeleinheit und/oder mit dem Basisblock mittels Spannklammern lösbar verbunden ist. Spannklammern gewährleisten eine schnelle und vielfach wiederholbare Montage und Demontage, wobei die Komponenten aber trotzdem mit guter Abdichtung aneinandergefügt werden. Bevorzugt können Flansche miteinander durch Spannklammern verbunden werden. Diese können in einfacher Weise angebracht werden, da bei dem beanspruchten Separator erfindungsgemäß vorgesehen ist, dass der Basisblock die Siebanordnung trägt und darüber ein Flansch vorgesehen ist, der mit dem Trennrohr lösbar verbunden ist. Durch die Anordnung der Siebanordnung auf dem Basisblock kann bei der Demontage zunächst das Trennrohr entfernt werden, wobei die Siebanordnung auf dem Basisblock liegen bleibt. Dort kann sie dann ebenfalls entnommen und anschließend gereinigt werden. Weiterhin ist es bevorzugt und vorteilhaft entsprechend einer weiteren Erfindungsausgestaltung, wenn die Siebanordnung einen Träger, ein Gazesieb und eine obere und eine untere Dichtung umfasst. Bei dem Träger kann es sich beispielsweise um ein grobmaschiges Sieb oder um ein Trägerlochblech handeln. Der Träger dient der Abstützung des Gazesiebes und weist Durchgangsöffnungen auf, damit die Flüssigkeiten hindurchströmen können. Das Gazesieb, das beispielsweise aus einem Edelstahlgewebe bestehen kann, ist besonders feinmaschig und weist bevorzugt und vorteilhaft eine Maschengröße von 10 µm auf. Mikroplastikpartikel mit kleineren Durchmessern werden durchgelassen. Dabei handelt es sich insbesondere um unerwünschte Verunreinigungen. Aber auch Mikroplastikpartikel mit einem kleineren Durchmesser werden durchgelassen. Das ist jedoch unkritisch, weil die Auflösungsgrenze der zu detektierenden Messgeräte oberhalb von 10 µm liegt, sodass kleinere Partikel ohnehin nicht detektiert werden können. Die Dichtungen, die beispielsweise aus Silikon bestehen können, dienen der sicheren Abdichtung der Dichtungsanordnung gegenüber dem Basisblock und dem Trennrohr.

Gegenüber dem Stand der Technik weist der Separator nach der Erfindung im Basisblock nicht einen Flüssigkeitseinlass, sondern auch ein Flüssigkeitsauslass auf. Dadurch können Flüssigkeiten in das Trennrohr sowohl eingespült als auch aus diesem herausgelassen werden. Bevorzugt und vorteilhaft ist es dabei gemäß einer nächsten Erfindungsausgestaltung, wenn der Flüssigkeitseinlass und der Flüssigkeitsauslass im Basisblock von einem bidirektionalen Flüssigkeitsventil gebildet sind. Da kein gleichzeitiges Ein- und Auslassen von Flüssigkeiten erforderlich ist, kann dann das Befüllen und Entleeren des Trennrohrs über dieses einzige Flüssigkeitsventil erfolgen. Weitere konstruktive Ausführungsdetails zum beanspruchten Mehrfach-Probenprozessor und zu seinen bevorzugten Ausführungsformen sind den Ausführungsbeispielen zu entnehmen.

Zusammen mit der vorstehenden Erläuterung des mit der Erfindung beanspruchten Separators und seinen aufgezeigten Modifikationen wurden auch bereits einige damit durchführbare Verfahrensschritte aufgezeigt. Der beanspruchte Separator kann besonders vorteilhaft und bevorzugt angewendet werden in einem Verfahren zur flüssigkeitsbasierten Trennung von Mikroplastikpartikeln aus Sedimenten mit den Verfahrensschritten:
- Einfüllen von Sediment in das Trennrohr durch den Sedimenteinlass,
- lösbares Montieren der Mikroplastikpartikeleinheit auf dem oberen Ende des Trennrohrs, wobei das bidirektionale Partikelventil in der Mikroplastikpartikeleinheit auf Durchlass in Richtung des Trennrohres gestellt ist,
- Befüllen des Trennrohres mit einer ersten Spülflüssigkeit durch den Flüssigkeitseinlass im Basisblock und durch die Siebanordnung,
- Entleeren des Trennrohres von der ersten Spülflüssigkeit durch den Flüssigkeitsauslass im Basisblock und durch die Siebanordnung,
- Befüllen des Trennrohres und der Mikroplastikpartikeleinheit mit einer hochdichten Trennflüssigkeit durch den Flüssigkeitseinlass im Basisblock und durch die Siebanordnung, wobei die Trennflüssigkeit in Trennrohr und Mikroplastikpartikeleinheit zur vollständigen, dichtebedingten Auswanderung von Mikroplastikpartikeln aus dem Sediment in die Mikroplastikpartikeleinheit ausreichend lange verbleibt,
- Schließen des bidirektionalen Partikelventils und Belüften der Mikroplastikpartikeleinheit,
- Entleeren des Trennrohres von der hochdichten Trennflüssigkeit durch den Flüssigkeitsauslass im Basisblock und durch die Siebanordnung und
- Demontieren der Mikroplastikpartikeleinheit vom Trennrohr, Invertieren der abgenommenen Mikroplastikpartikeleinheit und Öffnen des bidirektionalen Partikelventils zum Auslass der gesammelten Mikroplastikpartikel.

Ein besonderer Vorteil des beanspruchten Separators ist die Möglichkeit, vor der eigentlichen Separierung Spülschritte am zu beprobenden Sediment vornehmen zu können. Dadurch wird eine Verbesserung der Messergebnisse erreicht. Bevorzugt und vorteilhaft kann deshalb in einer Modifikation des Verfahrens noch vorgesehen sein, dass nach dem Befüllen und Entleeren des Trennrohres mit einer ersten Spülflüssigkeit eine weiteres Befüllen und Entleeren des Trennrohres mit einer zweiten Spülflüssigkeit durchgeführt wird. Weitere Spülschritte können problemlos folgen. Gemäß einer weiteren Verfahrensmodifikation können bevorzugt und vorteilhaft als erste Spülflüssigkeit Reinstwasser, als zweite Spülflüssigkeit eine wässrige Tensidlösung und/oder als hochdichte Trennflüssigkeit eine wässrige Salzlösung eingesetzt werden. Insbesondere kann es sich vorteilhaft und bevorzugt bei der wässrigen Salzlösung um eine wässrige Zinkchloridlösung handeln. Bei einem Einsatz von Reinstwasser kann der Neueintrag von Verschmutzungen im µm-Bereich verhindert werden. Eine Tensidlösung reinigt und verbessert die Anhaftung der Mikroplastikpartikel an die Wassermoleküle durch Herabsetzung der Oberflächenspannung. Schließlich kann im Verfahren gemäß einer weiteren Modifikation noch bevorzugt und vorteilhaft vorgesehen sein, dass nach dem Auslassen der gesammelten Mikroplastikpartikel das Trennrohr, die Siebanordnung und/oder die Mikroplastikpartikeleinheit vom Sediment gereinigt werden. Der mit der Erfindung beanspruchte Separator ist dann wieder betriebsbereit für seinen nächsten Einsatz.

### Ausführungsbeispiele

Nachfolgend wird der Separator zur flüssigkeitsbasierten Trennung von Mikroplastikpartikeln aus Sedimenten nach der Erfindung und seine vorteilhaften Modifikationen anhand der schematischen Figuren zum besseren Verständnis der Erfindung an Ausführungsbeispielen noch weitergehend erläutert. Dabei zeigt die
- Figur 1: einen grundsätzlichen Aufbau des Separators in der perspektivischen Ansicht und
- Figur 2: ein Ablaufschema zur Anwendung des Separators in einem Verfahren zur flüssigkeitsbasierten Trennung von Mikroplastikpartikeln aus Sedimenten.

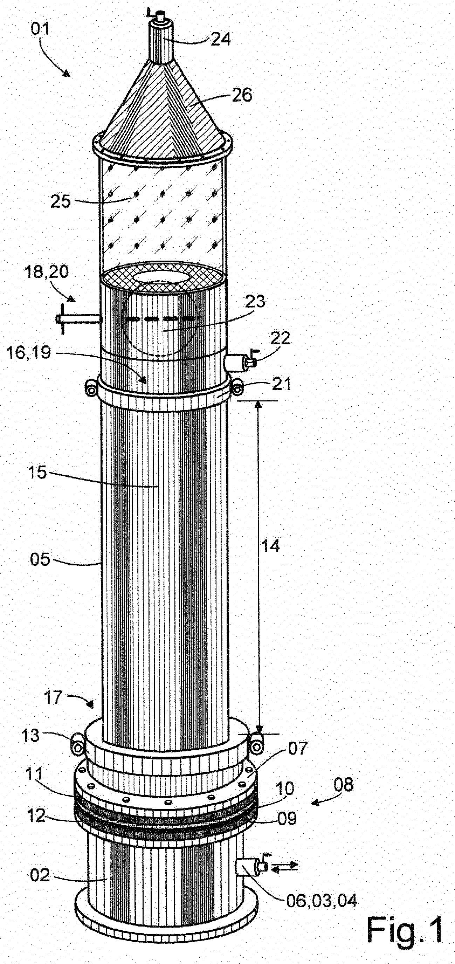

Die Figur 1 zeigt einen Separator 01 zur flüssigkeitsbasierten Trennung von Mikroplastikpartikeln aus Sedimenten in der schematischen Ansicht. Ein Basisblock 02 am unteren Ende des Separators 01 dient als Standfläche. Der Basisblock 02 weist seitlich einen Flüssigkeitseinlass 03 und einen Flüssigkeitsauslass 04 auf, die mit dem Inneren eines Trennrohres 05 fluidisch verbunden sind. Flüssigkeitseinlass 03 und Flüssigkeitsauslass 04 sind im gewählten Ausführungsbeispiel in einem bidirektionalen (Flüssigkeitsein- und -auslass) Flüssigkeitsventil 06 (beispielsweise einfaches Kugelventil) vereinigt. Auf dem Basisblock 02 ist unterhalb eines Flansches 07 eine Siebanordnung 08 vorgesehen. Diese besteht im gezeigten Ausführungsbeispiel aus einem Träger 09, einem Gazesieb 10 und einer oberen Dichtung 11 sowie einer unteren Dichtung 12. Das Gazesieb 10 weist eine Maschenweite von 10 µm auf. Die beiden Dichtungen 11, 12 sind ringförmig ausgebildet und bestehen aus Silikon. Der Flansch 07 ist unter Zwischenlage der Siebanordnung 08 mit dem Basisblock 02 verschraubt (Schrauben angedeutet).

Das Trennrohr 05 ist über eine untere Spannklammer 13 mit dem Basisblock 02 respektive mit dem damit verschraubten Flansch 07 lösbar verbunden. Die Spannklammer 13 hat ein Scharnier und eine gegenüberliegende Verriegelung. Mit dazwischenliegenden u-förmigen Halbschalen umgreift die Spannklammer 13 gegenüberliegende Ansätze an Trennrohr 05 und Basisblock 02. Nach dem Schließen der Verriegelung werden die Ansätze aneinandergedrückt. Das Trennrohr 05 ist als Zylinder mit einem gegenüber dessen Länge kleinen Durchmesser ausgebildet. Es weist dadurch eine lange Trennstrecke 14 bei einem gleichzeitig relativ geringen Volumen auf (geringer Verbrauch von einzusetzenden Flüssigkeiten). Im gezeigten Ausführungsbeispiel ist das Trennrohr 05 transparent, beispielsweise aus Acrylglas, ausgebildet, sodass sein Innenraum 15 beobachtet werden kann. Deutlich zu erkennen ist, dass sich im Innenraum 15 des Trennrohres 05 keine Einbauten und insbesondere keine flüssigkeitsbewegenden Mittel befinden. Somit können die Mikroplastikpartikel auch nicht durch diese beschädigt werden. Alternativ kann das Trennrohr 05 auch aus einem undurchsichtigen Stahlrohr oder einem anderen Metallrohr bestehen.

Am oberen Ende des Trennrohres 05 ist ein Sedimenteinlass 16 und am unteren Ende des Trennrohres ein Sedimentauslass 17 vorgesehen. Es handelt sich in beiden Fällen um den ungestörten Eintrittsquerschnitt des Trennrohres 05. Dieser ist gut zu bedienen, wenn ein Kopfblock 18 bzw. der Flansch 07 demontiert sind. Zusammen mit dem Sediment werden auch die zu detektierenden Mikroplastikpartikel in das Trennrohr 05 eingelassen. Der Sedimenteinlass 16 ist damit auch gleichzeitig ein Mikroplastikpartikeleinlass 19. Der Kopfblock 18 ist in Form einer demontierbaren Mikroplastikpartikelsammeleinheit 20 ausgebildet. Die lösbare Verbindung zum Trennrohr 05 erfolgt über eine obere Spannklammer 21. das Prinzip der oberen Spannklammer 21 entspricht dem der unteren Spannklammer 13, nunmehr werden Ansätze am Trennrohr 05 und an der Mikroplastikpartikelsammeleinheit 20 miteinander lösbar verbunden. Die Mikroplastikpartikelsammeleinheit 20 besteht im gezeigten Ausführungsbeispiel aus einer Belüftung 22, einem bidirektionalen (Partikelein- und -auslass) Partikelventil 23 (beispielsweise ein Kugelventil) und einem Mikroplastikpartikelauslass 24. Desweiteren verfügt sie noch über ein Schauglas 25 und einen Auslasstrichter 26 für die gesammelten Mikroplastikpartikel.

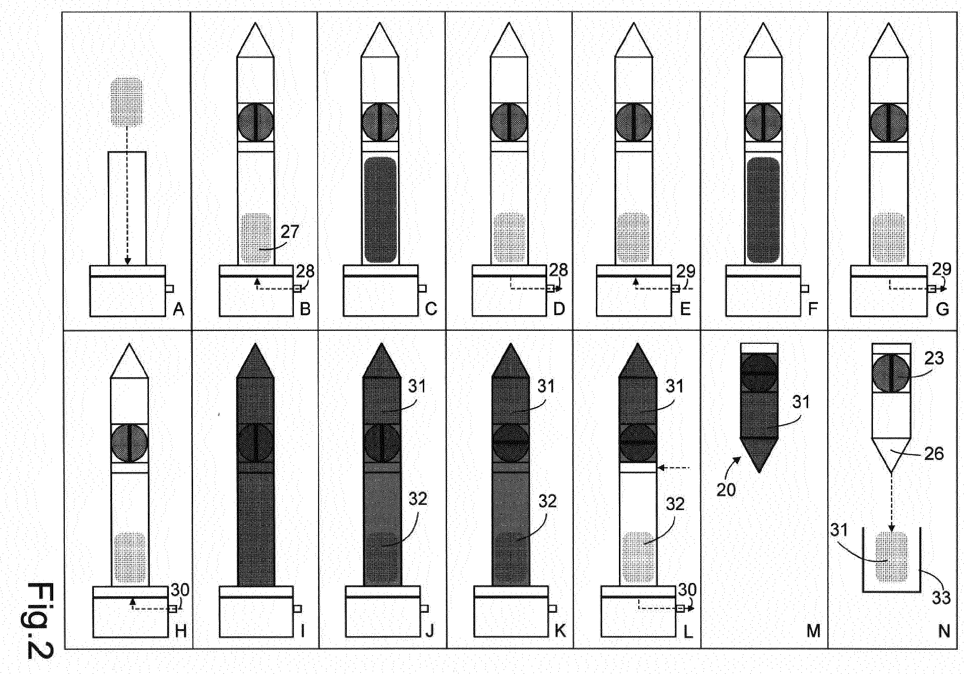

Die Funktionsweise des Separators 01 wird anschließend gemäß Figur 2 noch durch die Erläuterung seiner Anwendung in einem Verfahren zur flüssigkeitsbasierten Trennung von Mikroplastikpartikeln aus Sedimenten verdeutlicht. Dabei zeigen die mit Blockbuchstaben bezeichneten einzelnen Bilder verschiedene Verfahrensschritte (hier nicht gezeigte Bezugszeichen sind der Figur 1 zu entnehmen).
- A: Befüllen des Trennrohrs 05 mit Sediment 27 durch den Sedimenteinlass 16
- B: Montage der Mikroplastikpartikelsammeleinheit 20 und Öffnen des bidirektionalen Partikelventils 23 und Befüllen des Trennrohres 05 mit erster Spülflüssigkeit 28 (hier Reinstwasser) durch das bidirektionale Flüssigkeitsventil 06 und das Gazesieb 10
- C: erstes Durchspülen des Sediments 27
- D: Ablassen der ersten Spülflüssigkeit 28 durch das bidirektionale Flüssigkeitsventil 06 und das Gazesieb 10 (erstes Reinigen des Sediments 27)
- E: Befüllen des Trennrohres 05 mit zweiter Spülflüssigkeit 29 (hier Tensidlösung) durch das bidirektionale Flüssigkeitsventil 06 und das Gazesieb 10
- F: zweites Durchspülen des Sediments 27
- G: Ablassen der zweiten Spülflüssigkeit 29 durch das bidirektionale Flüssigkeitsventil 06 und das Gazesieb 10 (zweites Reinigen des Sediments 27 und Verbesserung der Adsorption der Mikroplastikpartikel an die Wassermoleküle)
- H: Befüllen des Trennrohres 05 und der Mikroplastikpartikelsammeleinheit 20 mit einer hochdichten Trennflüssigkeit 30 (hier ZnCl₂-Lösung) durch das bidirektionale Flüssigkeitsventil 06 und das Gazesieb 10
- I: Beginn der Standzeit mit gleichmäßiger Verteilung der Partikel 31, 32 in Trennrohr 05 und Mikroplastikpartikelsammeleinheit 20
- J: dichtebasierte Trennung der leichten Mikroplastikpartikel 31 von den schwereren Sedimentpartikeln 32 (Wanderung aller Mikroplastikpartikel 31 in die Mikroplastikpartikelsammeleinheit 20, Absinken der Sedimentpartikel 32)
- K: Ende der Standzeit und Schließen des bidirektionalen Partikelventils 23
- L: Belüften der Mikroplastikpartikelsammeleinheit 20 durch die Belüftung 22 und Ablassen der hochdichten Trennflüssigkeit 30 durch das das bidirektionale Flüssigkeitsventil 06 und das Gazesieb 10
- M: Demontieren und Invertieren der Mikroplastikpartikelsammeleinheit 20 und
- N: Öffnen des bidirektionalen Partikelventils 23 in der Mikroplastikpartikelsammeleinheit 20 und Auslassen (ggfs. durch Unterdruckerzeugung) der gesammelten Mikroplastikpartikel 31 durch den Auslasstrichter 26 in einen Auffangbehälter 33.
Die gesammelten Mikroplastikpartikel 31 werden dann einer Untersuchung mit einem Detektionsverfahren zur Qualifizierung und Quantifizierung zugeführt.

Nach dem Entfernen der Mikroplastikpartikel 31 wird der Separator 01 gereinigt. Dazu wird zunächst das Trennrohr 05 von dem Flansch 07 durch Öffnen der unteren Spannklammer 13 abgenommen. Das von den Mikroplastikpartikeln 31 befreite Sediment 27 kann dann durch den Sedimentauslass 17 in einen anderen Auffangbehälter abgefüllt und ggfs. entsorgt werden. Die Siebanordnung 08 wird durch Lösen der Verschraubung zwischen Flansch 07 und Basisblock 02 entnommen und gereinigt. Ebenso wird die Mikroplastikpartikeleinheit 20 vom Sediment 27 gereinigt. Anschließend werden alle Komponenten wieder zusammengebaut und der Separator 01 ist erneut einsatzbereit. Dabei kann beispielsweise auch eine andere Siebanordnung 08, insbesondere mit anderen Maschenweiten, eingesetzt werden.

### Bezugszeichenliste

- 01: Separator
- 02: Basisblock
- 03: Flüssigkeitseinlass
- 04: Flüssigkeitsauslass
- 05: Trennrohr
- 06: Flüssigkeitsventil
- 07: Flansch
- 08: Siebanordnung
- 09: Träger
- 10: Gazesieb
- 11: obere Dichtung
- 12: untere Dichtung
- 13: untere Spannklammer
- 14: Trennstrecke
- 15: Innenraum
- 16: Sedimenteinlass
- 17: Sedimentauslass
- 18: Kopfblock
- 19: Mikroplastikpartikeleinlass
- 20: Mikroplastikpartikelsammeleinheit
- 21: obere Spannklammer
- 22: Belüftung
- 23: Partikelventil
- 24: Mikroplastikpartikelauslass
- 25: Schauglas
- 26: Auslasstrichter
- 27: Sediment
- 28: erste Spülflüssigkeit
- 29: zweite Spülflüssigkeit
- 30: hochdichte Trennflüssigkeit
- 31: Mikroplastikpartikel
- 32: Sedimentpartikel
- 33: Auffangbehälter

## Patentansprüche

1. Separator (01) zur flüssigkeitsbasierten Trennung von Mikroplastikpartikeln (31) aus Sedimenten (27) mit einem Basisblock (02) mit einem Flüssigkeitseinlass (03), einer Siebanordnung (08), einem Trennrohr (05) und mit einem Kopfblock (18) mit einem Mikroplastikpartikelauslass (24) sowie mit einem Flüssigkeitsauslass (04), einem Sedimenteinlass (16) und einem Sedimentauslass (17),
**dadurch gekennzeichnet, dass**
der Flüssigkeitsauslass (04) im Basisblock (02) angeordnet ist, dass keine flüssigkeitsbewegenden Mittel im Trennrohr (05) vorgesehen sind, dass der Sedimenteinlass (16) direkt am oberen Ende des Trennrohres (05) vorgesehen ist und dass der Kopfblock (18) als abnehmbare Mikroplastikpartikelsammeleinheit (20) mit zumindest einer Belüftung (22), einem bidirektionalen Partikelventil (23) und dem Mikroplastikpartikelauslass (24) ausgebildet ist, wobei der Basisblock (02) die Siebanordnung (08) trägt und darüber ein Flansch (07) vorgesehen ist, der mit dem Trennrohr (05) lösbar verbunden ist.

2. Separator (01) nach Anspruch 1,
**dadurch gekennzeichnet, dass**
die Mikroplastikpartikelsammeleinheit (20) noch ein Schauglas (25) und/oder einen Auslasstrichter (26) aufweist.

3. Separator (01) nach Anspruch 1 oder 2,
**dadurch gekennzeichnet, dass**
das Trennrohr (05) als Zylinder mit einem gegenüber dessen Länge kleinen Durchmesser ausgebildet ist.

4. Separator (01) nach einem der vorangehenden Ansprüche,
**dadurch gekennzeichnet, dass**
das Trennrohr (05) transparent ausgebildet ist.

5. Separator (01) nach einem der vorangehenden Ansprüche,
**dadurch gekennzeichnet, dass**
das Trennrohr (05) mit der Mikroplastikpartikelsammeleinheit (20) und/oder mit dem Basisblock (02) mittels Spannklammern (13, 21) lösbar verbunden ist.

6. Separator (01) nach einem der vorangehenden Ansprüche,
**dadurch gekennzeichnet, dass**
am unteren Ende des Trennrohres (05) der Sedimentauslass (17) vorgesehen ist.

7. Separator (01) nach einem der vorangehenden Ansprüche,
**dadurch gekennzeichnet, dass**
die Siebanordnung (08) einen Träger (09), ein Gazesieb (10) und eine obere und eine untere Dichtung (11, 12) umfasst.

8. Separator (01) nach Anspruch 7,
**dadurch gekennzeichnet, dass**
das Gazesieb (10) eine Maschengröße von 10 µm aufweist.

9. Separator (01) nach einem der vorangehenden Ansprüche,
**dadurch gekennzeichnet, dass**
Flüssigkeitsein- und -auslass (03, 04) im Basisblock (02) von einem bidirektionalen Flüssigkeitsventil (06) gebildet sind.

10. Verwendung des Separators (01) gemäß einem der vorangehenden Ansprüche in einem Verfahren zur flüssigkeitsbasierten Trennung von Mikroplastikpartikeln (31) aus Sedimenten (27) mit den Verfahrensschritten:
• Einfüllen von Sediment (27) in das Trennrohr (05) durch den Sedimenteinlass (16),
• lösbares Montieren der Mikroplastikpartikelsammeleinheit (20) auf dem oberen Ende des Trennrohres (05), wobei das bidirektionale Partikelventil (23) in der Mikroplastikpartikeleinheit (20) auf Durchlass in Richtung des Trennrohres (05) gestellt ist,
• Befüllen des Trennrohres (05) mit einer ersten Spülflüssigkeit (28) durch den Flüssigkeitseinlass (03) im Basisblock (02) und durch die Siebanordnung (08),
• Entleeren des Trennrohres (05) von der ersten Spülflüssigkeit (28) durch den Flüssigkeitsauslass (04) im Basisblock (02) und durch die Siebanordnung (08),
• Befüllen des Trennrohres (05) und der Mikroplastikpartikelsammeleinheit (20) mit einer hochdichten Trennflüssigkeit (30) durch den Flüssigkeitseinlass (03) im Basisblock (02) und durch die Siebanordnung (08), wobei die Trennflüssigkeit (30) in Trennrohr (05) und Mikroplastikpartikelsammeleinheit (20) zur vollständigen, dichtebedingten Auswanderung von Mikroplastikpartikeln (31) aus dem Sediment (27) in die Mikroplastikpartikelsammeleinheit (20) ausreichend lange verbleibt,
• Schließen des bidirektionalen Partikelventils (23) und Belüften der Mikroplastikpartikelsammeleinheit (20),
• Entleeren des Trennrohres (05) von der hochdichten Trennflüssigkeit durch den Flüssigkeitsauslass (04) im Basisblock (02) und durch die Siebanordnung (08) und
• Demontieren der Mikroplastikpartikelsammeleinheit (20) vom Trennrohr (05), Invertieren der abgenommenen Mikroplastikpartikelsammeleinheit (20) und Öffnen des bidirektionalen Partikelventils (23) zum Auslass der gesammelten Mikroplastikpartikel (31).

11. Verwendung nach Anspruch 10,
**dadurch gekennzeichnet, dass**
nach dem Befüllen und Entleeren des Trennrohres (05) mit einer ersten Spülflüssigkeit (28) ein weiteres Befüllen und Entleeren des Trennrohres (05) mit einer zweiten Spülflüssigkeit (29) durchgeführt wird.

12. Verwendung nach Anspruch 10 oder 11,
**dadurch gekennzeichnet, dass**
als erste Spülflüssigkeit (28) Reinstwasser, als zweite Spülflüssigkeit (29) eine wässrige Tensidlösung und/oder als hochdichte Trennflüssigkeit (30) eine wässrige Salzlösung eingesetzt wird.

13. Verwendung nach Anspruch 12,
**dadurch gekennzeichnet, dass**
als wässrige Salzlösung eine wässrige Zinkchloridlösung eingesetzt wird.

14. Verwendung nach einem der vorangehenden Ansprüche,
**dadurch gekennzeichnet, dass**
nach dem Auslassen der gesammelten Mikroplastikpartikel (31) das Trennrohr (05), die Siebanordnung (08) und/oder die Mikroplastikpartikeleinheit (20) vom Sediment (27) gereinigt werden.

## Claims

1. Separator (01) for the fluid-based separation of microplastic particles (31) from sediments (27) with a base block (02) with a fluid inlet (03), a sieve device (08), a separation pipe (05) and with a head block (18) with a microplastic particle outlet (24) as well as with a fluid outlet (04), a sediment inlet (16) and a sediment outlet (17),
**characterised in that the**
fluid outlet (04) is arranged in the base block (02), **in that** no fluid moving means are provided in the separation pipe (05), **in that** the sediment inlet (16) is provided directly at the upper end of the separation pipe (05) and **in that** the head block (18) is designed as a detachable microplastic particle collection unit (20) with at least one vent (22), a bidirectional particle valve (23) and the microplastic particle outlet (24), wherein the base block (02) bears the sieve device (08) and above it a flange (07) is provided which is detachably connected to the separation pipe (05).

2. Separator (01) according to claim 1
**characterised in that**
the microplastic particle collection unit (20) also comprises a sight glass (25) and/or an outlet funnel (26) .

3. Separator (01) according to claim 1 or 2
**characterised in that the**
separation pipe (05) is designed as a cylinder with a small diameter compared with its length.

4. Separator (01) according to any one of the preceding claims
**characterised in that**
the separation pipe (05) is transparent.

5. Separator (01) according to any one of the preceding claims
**characterised in that**
the separation pipe (05) is detachably connected to the microplastic particle collection unit (20) and/or to the base block (02) by means of clamping brackets (13, 21).

6. Separator (01) according to any one of the preceding claims
**characterised in that**
the sediment outlet (17) is provided at the lower end of the separation pipe (05).

7. Separator (01) according to any one of the preceding claims
**characterised in that**
the sieve device (08) comprises a support (09), a gauze sieve (10) and an upper and a lower seal (11, 12) .

8. Separator (01) according to claim 7
**characterised in that**
the gauze sieve (10) has a mesh size of 10 µm

9. Separator (01) according to any one of the preceding claims
**characterised in that**
the fluid inlet and outlet (03, 04) are formed by a bidirectional fluid valve (06) in the base block (02).

10. Use of the separator (01) according to any one of the preceding claims in a method for the fluid-based separation of microplastic particles (31) from sediments (27) with the processing stages:
• filling sediment (27) into the separation pipe (05) through the sediment inlet (16),
• detachably mounting the microplastic particle collection unit (20) on the upper end of the separation pipe (05), wherein the bidirectional particle valve (23) in the microplastic particle collection unit (20) is set to opening in the direction of the separation pipe (05),
• filling the separation pipe (05) with a first rinsing solution (28) through the fluid inlet (03) in the base block (02) and through the sieve device (08),
• draining the separation pipe (05) of the first rinsing fluid (28) through the fluid outlet (04) in the base block (02) and through the sieve device (08),
• filling the separation pipe (05) and the microplastic particle collection unit (20) with a high-density separation fluid (30) through the fluid inlet (03) in the base block (02) and through the sieve device (08), wherein the separation fluid (30) remains in the separation pipe (05) and microplastic particle collection unit (20) for a sufficiently long period for complete, density-induced migration of microplastic particles (31) out of the sediment (27) into the microplastic particle collection unit (20) to take place,
• closing of the bidirectional particle valve (23) and venting the microplastic particle collection unit (20),
• draining the separation pipe (05) of the high-density separation fluid through the fluid outlet (04) in the base block (02) and through the sieve device (08) and
• dismantling the microplastic particle collection unit (20) from the separation pipe (05), inverting the removed microplastic particle collection unit (20) and opening the bidirectional particle valve (23) to let out the collected microplastic particles (31).

11. Use according to claim 10
**characterised in that**
after filling and draining the separation pipe (05) with a first rinsing fluid (28), further filling and draining of the separation pipe (05) with a second rinsing fluid (29) is carried out.

12. Use according to claim 10 or 11
**characterised in that**
as the first rinsing fluid (28) ultra-pure water is used and as the second ringing fluid (29) an aqueous tenside solution and/or as the high-density separation fluid (30) an aqueous salt solution are used.

13. Use according to claim 12
**characterised in that**
an aqueous zinc chloride solution is used as the aqueous salt solution.

14. Use according to any one of the preceding claims
**characterised in that**
after letting out the collected microplastic particles (31) the separation pipe (05), the sieve device (08) and/or the microplastic particle collection unit (20) are cleaned of sediment (27).

## Revendications

1. Séparateur (01), destiné à séparer sur base liquide des particules microplastiques (31) à partir de sédiments (27), pourvu d'un bloc de base (02) muni d'une entrée de liquide (03), d'un agencement de tamisage (08), d'un tube séparateur (05) et d'un bloc de tête (18) muni d'une sortie de particules microplastiques (24), ainsi que d'une sortie de liquide (04), d'une entrée de sédiments (16) et d'une sortie de sédiments (17),
**caractérisé en ce que**
la sortie de liquide (04) est placée dans le bloc de base (02), **en ce que** dans le tube séparateur (05) n'est prévu aucun agent de mise en mouvement du liquide, **en ce que** l'entrée de sédiments (16) est prévue directement sur l'extrémité supérieure du tube séparateur (05) et **en ce que** le bloc de tête (18) est conçu sous la forme d'une unité collectrice de particules microplastiques (20) amovible, pourvue d'au moins une ventilation (22), d'une soupape à particules (23) bidirectionnelle et de la sortie de particules microplastiques (24), le bloc de base (02) portant l'agencement de tamisage (08) et au-dessus étant prévue une bride (07) qui est assemblée de manière amovible avec le tube séparateur (05).

2. Séparateur (01) selon la revendication 1,
**caractérisé en ce que**
l'unité collectrice de particules microplastiques (20) comporte encore un verre de regard (25) et/ou une trémie de sortie (26).

3. Séparateur (01) selon la revendication 1 ou 2,
**caractérisé en ce que**
le tube séparateur (05) est conçu sous la forme d'un cylindre, pourvu d'un faible diamètre en rapport à sa longueur.

4. Séparateur (01) selon l'une quelconque des revendications précédentes,
**caractérisé en ce que**
le tube séparateur (05) est conçu sous forme transparente.

5. Séparateur (01) selon l'une quelconque des revendications précédentes,
**caractérisé en ce que**
le tube séparateur (05) est assemblé de manière amovible avec l'unité collectrice de particules microplastiques (20) et/ou avec le bloc de base (02) à l'aide de pinces de serrage (13, 21).

6. Séparateur (01) selon l'une quelconque des revendications précédentes,
**caractérisé en ce que**
la sortie de sédiments (17) est prévue sur l'extrémité inférieure du tube séparateur (05).

7. Séparateur (01) selon l'une quelconque des revendications précédentes,
**caractérisé en ce que**
l'agencement de tamisage (08) comprend un support (09), un tamis à gaze (10) et un joint (11, 12) inférieur et supérieur.

8. Séparateur (01) selon la revendication 7,
**caractérisé en ce que**
le tamis à gaze (10) présente un maillage de 10 µm.

9. Séparateur (01) selon l'une quelconque des revendications précédentes,
**caractérisé en ce que**
l'entrée et la sortie de liquide (03, 04) dans le bloc de base (02) sont conçues par une soupape pour liquides (06) bidirectionnelle.

10. Utilisation du séparateur (01) selon l'une quelconque des revendications précédentes lors d'un procédé de séparation sur base liquide des particules microplastiques (31) à partir de sédiments (27), comportant les étapes de procédé suivantes, consistant à :
• charger des sédiments (27) dans le tube séparateur (05) à travers l'entrée de sédiments (16),
• monter de manière amovible l'unité collectrice de particules microplastiques (20) sur l'extrémité supérieure du tube séparateur (05), la soupape à particules (23) bidirectionnelle étant réglée dans l'unité de particules microplastiques (20) sur un passage dans la direction du tube séparateur (05),
• remplir le tube séparateur (05) avec un premier liquide de rinçage (28) à travers l'entrée de liquide (03) dans le bloc de base (02) et à travers l'agencement de tamisage (08),
• vider le tube séparateur (05) du premier liquide de rinçage (28) à travers la sortie de liquide (04) dans le bloc de base (02) et à travers l'agencement de tamisage (08),
• remplir le tube séparateur (05) et l'unité collectrice de particules microplastiques (20) d'un liquide séparateur (30) haute densité, à travers l'entrée de liquide (03) dans le bloc de base (02) et à travers l'agencement de tamisage (08), le liquide séparateur (30) restant dans le tube séparateur (05) et dans l'unité collectrice de particules microplastiques (20) suffisamment longtemps pour une migration totale, due à la densité de particules microplastiques (31) hors des sédiments (27) dans l'unité collectrice de particules microplastiques (20) t,
• fermer la soupape à particules (23) bidirectionnelle et ventiler l'unité collectrice de particules microplastiques (20),
• vider le tube séparateur (05) du liquide séparateur haute densité à travers la sortie de liquide (04) dans le bloc de base (02) et à travers l'agencement de tamisage (08) et
• démonter l'unité collectrice de particules microplastiques (20) du tube séparateur (05), inverser l'unité collectrice de particules microplastiques retirée (20) et ouvrir la soupape à particules (23) bidirectionnelle pour faire sortir les particules microplastiques (31) collectées.

11. Utilisation selon la revendication 10,
**caractérisée en ce que**
qu'après le remplissage et la vidange du tube séparateur (05) d'un premier liquide de rinçage (28), il est procédé à un nouveau remplissage et à une nouvelle vidange du tube séparateur (05) avec un deuxième liquide de rinçage (29).

12. Utilisation selon la revendication 10 ou 11,
**caractérisée en ce qu'en**
tant que premier liquide de rinçage (28) est utilisée de l'eau extrêmement pure, en tant que deuxième liquide de rinçage (29) est utilisée une solution aqueuse d'agent tensioactif et/ou en tant que liquide séparateur (30) haute densité est utilisée une solution saline aqueuse.

13. Utilisation selon la revendication 12,
**caractérisée en ce qu'en**
tant que solution saline aqueuse est utilisée une solution aqueuse de chlorure de zinc.

14. Utilisation selon l'une quelconque des revendications précédentes,
**caractérisée en ce qu'après**
la sortie des particules microplastiques (31) collectées, on nettoie le tube séparateur (05), l'agencement de tamisage (08) et/ou l'unité de particules microplastiques (20) des sédiments (27).
